# EUROPEAN PATENT APPLICATION

(11) **EP 2 093 546 A1**
(43) Date of publication of application: **26.08.2009**
(21) Application number: 08003281.6
(22) Date of filing: 22.02.2008
(51) Int. Cl.: G01F 23/296, G01S 7/527, G01S 7/292, G01S 13/70

(54) **A method for locating a wanted echo from unwanted echoes in a time-of-flight level measurement system**

(71) Applicant: Siemens Milltronics Process Instruments Inc., ON K9J 7B1 Peterborough (CA)
(72) Inventor: Larocque, Jean-René, Dr., Peterborough ON K9J 8E1 (CA); Lyon, George Quinton, Peterborough ON K9K 1T9 (CA)
(74) Representative: Maier, Daniel Oliver

(57) **Abstract**

A series of pulses is transmitted to a surface of a material whose level is to be measured.

For each transmit pulse, received echoes (18, 19, 20) are converted into an echo function (17).

The time (t) following each transmit pulse is divided into time bins (22), and for each time bin (22) an echo function value is generated by which the echo function (17) exceeds a threshold.

The echo function values are stored in a two-dimensional pattern (24) whose dimensions are the number (n) of transmit pulses and the number (m) of time bins (22).

An image processing algorithm is applied to said pattern (24) for identifying clusters of similar echo function values forming trails (28, 29, 30).

On the basis of motion information on the level to be measured, one of said trails (28, 29, 30) is selected as a motion path of the wanted echo (25).

## Description

The present invention relates to a method for locating a wanted echo from unwanted echoes in a time-of-flight level measurement system.

Time-of-flight or pulse-echo ranging systems are commonly used in level measurement applications for determining the distance to a reflective surface of a material, such as liquid, slurry or solid, by measuring how long after transmission of a transmit pulse the echo or reflected pulse is received. A transmit pulse in this context should be understood to comprise a single energy pulse or a burst of energy pulses. Time-of-flight systems typically use ultrasonic, radar or microwave pulses and generally include a transducer and a signal processor. The transducer serves the dual role of periodically transmitting the energy pulses and receiving the reflected energy pulses or echoes. The signal processor is for detecting and calculating the distance or range of the target, here the material surface, based on the transmit times of the transmitted energy pulses and the reflected energy pulses or echoes. For that purpose, the signal processor forms an echo function or echo profile representing the received echo amplitudes as a function of their respective travel times. Each value of the echo function corresponds to the amplitude of an echo reflected at a certain distance from the transducer.

One main problem of echo processing is selecting the wanted level echo from false echoes generated by other obstacles such as the internal structure of and installations in a tank or vessel containing the material. A commonly used technique for finding the wanted echo in an echo profile involves generating a time-varying threshold (TVT) curve. The TVT curve provides a baseline on the echo profile which is above the noise level in the echo profile and above the level of the echoes of the obstacles. The echo of interest then appears above the TVT curve. Various algorithms and techniques are known in the art for the generating the TVT curve. The TVT is usually acquired by shaping around the echo profile of an empty vessel. It can also be manually shaped or adjusted to provide the best performance.

Further, an echo lock window may be used as a rudimentary history tracker to track the echo of interest in consecutive measurement cycles. For a next echo to be considered valid, it must be within the lock window. Otherwise, it must appear within a potential new lock window for a consecutive number of times before being selected.

Accordingly, there remains a need to improve the reliability in locating a wanted echo from unwanted echoes in a time-of-flight level measurement system.

According to the invention, this object is achieved by the method as claimed in claim 1, said method comprising the steps of:
transmitting a series of transmit pulses to a surface of a material whose level is to be measured;
receiving and converting, for each transmit pulse, associated echoes into an echo function over time;
dividing the time following each transmit pulse into time bins and generating for each time bin an echo function value by which the echo function in said respective time bin exceeds a threshold;
storing the echo function values in a two-dimensional pattern whose first dimension is the number of said transmit pulses and whose second dimension is the number of said time bins;
applying an image processing algorithm to said two-dimensional pattern for identifying clusters of similar echo function values forming trails along said first dimension; and
selecting, on the basis of motion information on the level to be measured, one of said trails as a motion path of the wanted echo.

The motion information on the level to be measured may be the filling or emptying rate of a tank. If the level to be measured is known to be constant, i. e. not changing over a certain length of time, any trail (trace, trajectory) in the two-dimensional pattern representing a moving target, especially a periodically moving target such as a stirrer in a vessel, may be disregarded when selecting the trail of the wanted echo. On the other hand, if the level to be measured is known to be steadily increasing or decreasing, any trail in the two-dimensional pattern representing a non-moving target such as the internal structure of and fixed installations in the vessel, or representing a periodically moving target such as a stirrer in a vessel, may be disregarded when selecting the trail of the wanted echo.

For further description of the invention, reference is made to the accompanying drawings, in which, by way of example:
- Figure 1: shows a block diagram of a a time-of-flight level measurement system,
- Figure 2: shows an echo profile and a time-varying threshold function,
- Figure 3: shows a two-dimensional pattern of echo function values, wherein the first dimension is the number of transmit pulses and the second dimension is the number of time bins, and
- Figure 4: shows the two-dimensional pattern after having undergone an image processing algorithm.

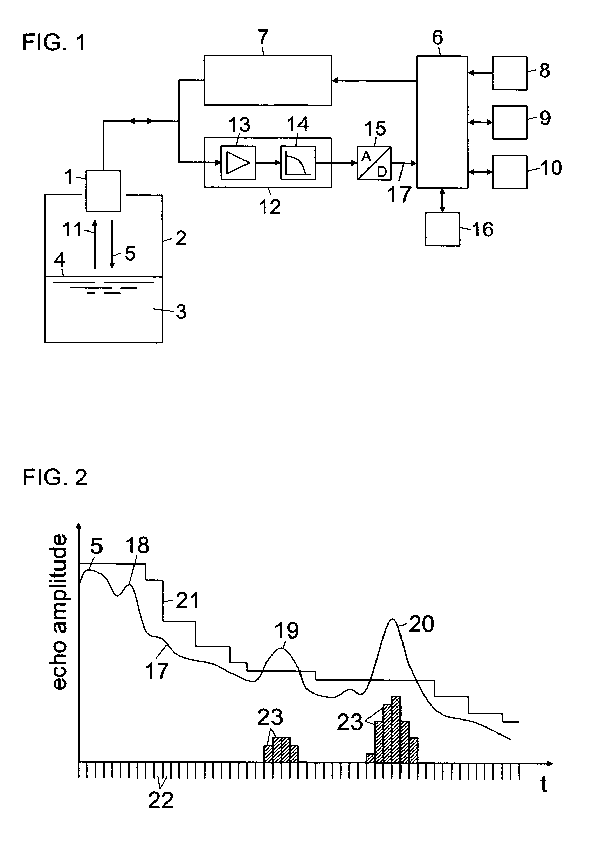

Reference is first made to Figure 1 which shows a simplified schematic diagram of a time-of-flight level measurement system which may be ultrasonic or radar based. The system comprises an acoustic or microwave transducer 1 which is installed in a tank or vessel 2 containing a liquid or other type of material 3 with a level determined by the top surface 4 of the material 3. The top surface 4 of the liquid 3 provides a reflective surface which reflects ultrasound or radar pulses 5 generated and transmitted by the transducer 1. The transducer 1 is coupled to a microcontroller 6 through a transmitter 7. The microcontroller 6 operates under a control program stored in read-only memory (ROM) 8, utilizing parameters stored in non-volatile random access memory (NVRAM) 9, and provided with a working memory in the form of random access memory (RAM) 10. The microcontroller 6 controls the transmitter 7 to excite the transducer 1 to transmit the ultrasound or radar pulses 5 at predetermined points in time and with a predetermined frequency and amplitude. Each pulse should be understood as a single pulse or a burst of pulses. The reflected pulses or echoes 11 from the surface 4 of the material 3, the wall of the tank 2 and obstacles in the measurement environment (not shown) are received by the transducer 1 and converted into an electrical signal which is then fed to a receiver 12. The transmitter 7 and the receiver 12 can be implemented individually or be combined to form a transceiver. The receiver 12 may comprise an amplifier 13 and an envelope detector 14 for amplifying and thereafter shaping the electrical signal output from the transducer 1. The output from the envelope detector 14 is then sampled and digitized by an analog-to-digital converter 15, from where a digital echo function or echo profile is stored in the RAM 10 for further processing by the microcontroller 6. The microcontroller 6 executes an algorithm which identifies and verifies the true echoes 11 from the surface 4 of the material 3 and calculates the range of the reflective surface 4, i.e. the time it takes for the echoes 11 to travel from the reflective surface 4 to the transducer 1. From this calculation, the distance to the surface 4 of the material 3 and thereby the level of the material 3 is determined. An interface 16, which is also controlled by the microcontroller 6, provides for the export of data from the level measurement system and the import of operating parameters or other data. Data may be exported in the form of a display, telemetry (e.g. bus) signals and/or alarm signals. Imported data may be the filling or emptying rate of the tank 2.

Figure 2 is a diagram showing in a very simplified manner the echo profile or function 17 as a response to a transmitted pulse 5 which appears as a large initial peak. The echo profile 17 then decays with time t, wherein unwanted echoes 18, 19 from obstacles and the wanted but unknown echo 20 from the surface 4 of the material 3 appear as peaks which may interfere with each other. A time-varying threshold (TVT) 21 is set providing a baseline which is above the noise level in the echo profile 17 and preferably above the level of the unwanted echoes 18, 19 of the obstacles so that only the echo 20 of interest appears above the threshold 21. The construction of the TVT curve, however, is complex and no single TVT construction method has been found to be suitable for all applications. Therefore the user is required to select an appropriate TVT curve and even to make further adjustments to the selected curve in some applications. In the shown example, the unwanted echo 19 is rather strong and it would be elaborate or even impossible to shape the threshold 21 around said echo 19, especially when the echo producing obstacle, e. g. a stirrer, is moving.

In the approach according to the invention, the time t following each transmit pulse 5 is divided into m time bins 22. For each time bin 22 an echo function value 23 is generated by which the magnitude (maximum amplitude, mean amplitude or energy) of the echo function 17 in said respective time bin 22 exceeds the threshold 21. The threshold 21 may be an over-all time-varying function or be divided into a number of sub-thresholds individually assigned to said time bins 22.

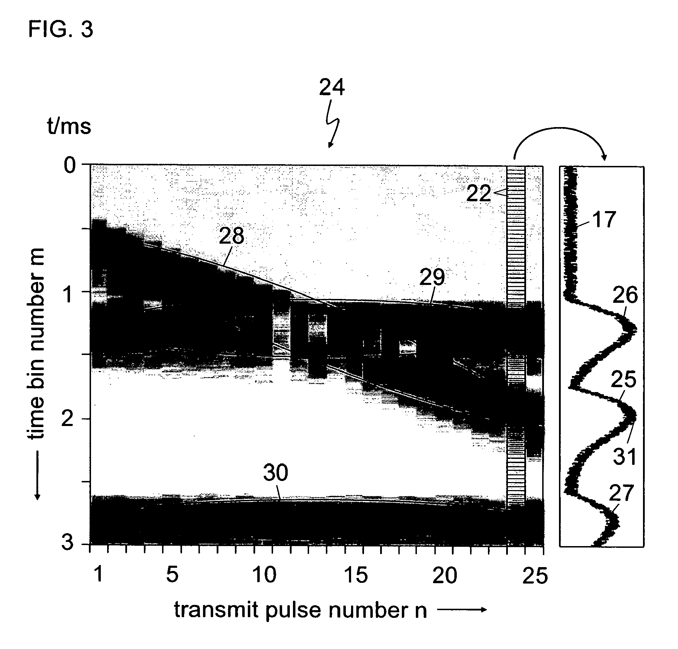

After having been thresholded, the echo profiles 17 of a series of n consecutive transmit pulses 5 are stored as a two-dimensional pattern 22 of echo function values 23. Figure 3 shows in the left part an example of such a pattern 24. The first dimension of the pattern 24 is the number n (here n = 25) of transmit pulses 5 and the second dimension is the number of time bins 22. For better illustration, the echo function values 23 appear in gray tones in which higher values correspond to darker tones.

Looking at the one-dimensional data of the right part of Figure 3 representing the echo profile 17 (more exactly, the echo function values 23 by which the echo function 17 in said respective exceeds the threshold 21) of transmit pulse number 24, one would be hard-pressed to identify the correct echo corresponding to the surface 4 of the material 3. There are two echoes 25, 26 of approximately same strength and general characteristics, and a third smaller echo 27. In this particular example, echo 26 comes from an obstacle that is stationary, echo 25 comes from the moving material 3, and echo 27 is from the bottom of the tank 2. Without any historical data, it would be impossible to detect the moving echo 25 of the material 3 from the stationary echoes 26, 27 of the obstacle or the tank bottom.

However, after looking at the two-dimensional pattern 24 for only a few seconds, a trained operator has no problem locating the echo 25 of interest. The moving echo 25 stands out amongst the echoes 26, 27 from the fixed obstacles.

Thus, according to the invention, an image processing algorithm is applied to the two-dimensional pattern 24 for identifying clusters 28, 29, 30 of similar echo function values 23 forming trails (traces, trajectories) along said first dimension of transmit pulse numbers n. The term "image processing algorithm" should be understood to include any known image segmentation technique or pattern classification where regions of an image are labeled as belonging together.

On the basis of motion information on the level of the material 3, such as filling or emptying rate of the tank 2, one of said trails is selected as a motion path of the wanted echo 25. If the level to be measured is known to be steadily increasing or decreasing, those trajectories 29, 30 are eliminated that are found stationary. Doing so, fixed targets can be identified and the echo 25 from the material 3 in the vessel 2 can be selected with more high confidence. By use of two-dimensional noise reduction methods, a very clear picture is gained that emphasizes the trajectory 29 of the moving trajectory 28 of the material 3 in the vessel 2 even in the presence of severe noise or interfering reflections. Some examples of interference are:
- periodic movements of a stirrer,
- noise, electrical or measurement noise,
- multiple reflections,
- phase interference from sidewall and
- seam in the vessel wall.

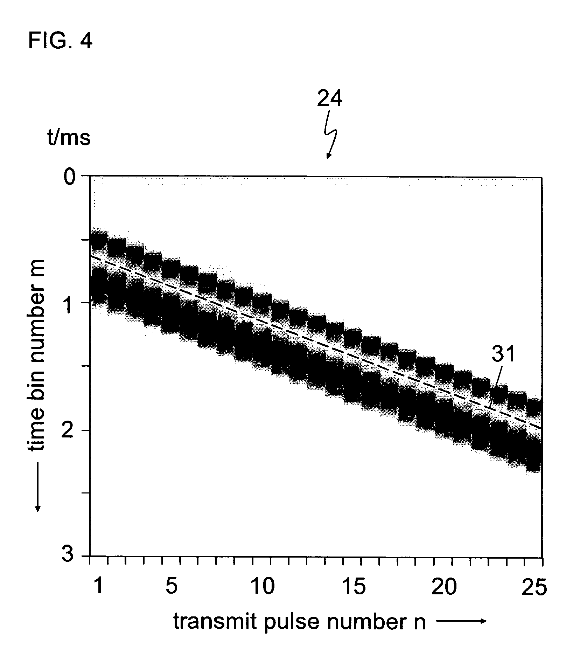

Figure 4 shows an example of the two-dimensional pattern 24 after having undergone the image processing algorithm. With this two-dimensional filtered data available, it is very easy to detect that the echo 25 of interest of transmit pulse number n = 25 is around 2 ms. One can also infer that the level moved from approx 0.6 ms to 2 ms over the time of the 25 transmit pulses.

In the pattern 24 shown in Figure 3, the echo 25 has been distorted or is of low amplitude in the region of pulse number n = 10 to 13 and n = 17 to 19. As Figure 4 shows, the image processing trend allows to override the immediate result and to generate a result within the cluster 28 that best represents the level to be measured. The echo signal 25 itself may be 0.3 m wide but its peak shows the level to be measured to within a few millimeters. The image processing of the selected cluster 28 advantageously allows to accurately find and then track the peak 31 of the echo 25.

The field of image processing is quite complex on its own and many techniques come into question to implement such solution: image segmentation, watershed processing, and pattern classification. The solution can be implemented in software, e. g. in the microcontroller 6, or hardware devices specific to such task can be added to the design. It may include and not limited to:
- watershed analysis,
- peak seeking and tracking,
- edge finding and boundary setting (contouring),
- sharpening to enhance changes,
- blurring to remove noise,
- periodic noise removal,
- regional contrast enhancement,
- pseudo colour coding (for enhanced user presentation),
- background subtraction (for enhanced user presentation),
- morphology to remove noise and to fill in gaps (dilation, erosion, blending),
- directional filtering (enhancing or reducing trends in a particular direction, e. g. horizontal line removal) and
- histogram processing

Historical level measurements can be more accurately determined from the image, these are important in:
- batching applications,
- dynamic control and
- adaptive or learning systems.

The method according to the invention does not need any knowledge of the vessel 2, nor does it require the learning of the obstacles. It is also robust to the changes that new mechanical installations would introduce in the vessel 2.

Furthermore, the pattern (24) may be outputted via the interface 16 on a display making it much easier to understand for customers and field agents than sophisticated signal processing algorithms.

Finally, various parameters can be estimated directly from the image, such as the rate of filling or emptying (the slope of the trajectory 28), and even the presence or absence of a stirrer, which would result in blips on the trajectory.

## Claims

1. A method for locating a wanted echo (20; 25) from unwanted echoes (18, 19; 26, 27) in a time-of-flight level measurement system, said method comprising the steps of:
- transmitting a series of transmit pulses (5) to a surface (4) of a material (3) whose level is to be measured;
- receiving and converting, for each transmit pulse (5), associated echoes (18, 19, 20) into an echo function (17) over time (t);
- dividing the time (t) following each transmit pulse (5) into time bins (22) and generating for each time bin (22) an echo function value (23) by which the echo function (17) in said respective time bin (22) exceeds a threshold (21);
- storing the echo function values (23) in a two-dimensional pattern (24) whose first dimension is the number (n) of said transmit pulses (5) and whose second dimension is the number (m) of said time bins (22);
- applying an image processing algorithm to said two-dimensional pattern (24) for identifying clusters of similar echo function values (23) forming trails (28, 29, 30) along said first dimension (n); and
- selecting, on the basis of motion information on the level to be measured, one of said trails (28, 29, 30) as a motion path of the wanted echo (20; 25).

2. The method according to claim 1, wherein the threshold (21) is variable over time (t) and wherein, before dividing the time (t) following each transmit pulse (5) into time bins (22), the echo function (17) is thresholded by the threshold (21).

3. The method according to claim 1, wherein the threshold (21) is divided into a number of sub-thresholds individually assigned to said time bins (22).

4. The method according to one of the preceding claims, further comprising visualizing the pattern (24) on a display.

5. The method according to one of the preceding claims, further comprising applying further image processing techniques to the selected trail (28) to identify the peak (31) of the wanted echo (20; 25).
